# EUROPEAN PATENT APPLICATION

(11) **EP 3 086 596 A1**
(43) Date of publication of application: **26.10.2016**
(21) Application number: 14871291.2
(22) Date of filing: 18.12.2014
(51) Int. Cl.: H04W 28/08, H04M 11/00, H04W 40/02, H04W 92/18

(54) **MOBILE COMMUNICATION SYSTEM, WIRELESS COMMUNICATION DEVICE, NETWORK DEVICE, AND WIRELESS TERMINAL**

(30) Priority: 20.12.2013 JP 2013264617
(71) Applicant: Kyocera Corporation, Kyoto-shi Kyoto 612-8501 (JP)
(72) Inventor: FUJISHIRO, Masato, Kyoto-shi Kyoto 612-8501 (JP); YAMAZAKI, Chiharu, Kyoto-shi Kyoto 612-8501 (JP); MORITA, Kugo, Kyoto-shi Kyoto 612-8501 (JP)
(74) Representative: Schwabe - Sandmair - Marx
(86) International application number: PCT/JP2014/083540
(87) International publication number: WO 2015/093560

(57) **Abstract**

A mobile communication system supports D2D communication being direct terminal-to-terminal communication. The mobile communication system comprises: UE 100-1 that receives a first control signal from a cellular communication network, and performs the D2D communication with UE 100-2 based on the first control signal. The UE 100-1 connects to cable communication network 40 and receives downlink user data addressed to the UE 100-2 from the cable communication network 40. The UE 100-1 performs D2D data relay of transmitting the downlink user data received from the cable communication network 40, to the UE 100-2 through the D2D communication.

## Description

### TECHNICAL FIELD

The present invention relates to a mobile communication system supporting D2D communication, and to a radio communication apparatus, a network apparatus, and a radio terminal that are used in the mobile communication system.

### BACKGROUND ART

In the 3rd Generation Partnership Project (3GPP), which is a mobile communication system standardization project, the introduction of terminal-to-terminal (Device to Device: D2D) communication is considered as a new function launched from the release 12 (refer to Non Patent Literature 1).

In D2D communication, a plurality of closely-located radio terminals directly performs terminal-to-terminal communication not via a cellular communication network. On the other hand, in cellular communication, which is normal communication of a mobile communication system, radio terminals perform communication via a cellular communication network. In D2D communication, as compared with cellular communication, reduction in power consumption of radio terminals and reduction in traffic load on a cellular communication network can be expected.

### CITATION LIST

### NON PATENT LITERATURE

Non Patent Literature 1: 3GPP Technical Report "TR 22.803 V12.2.0" June 2013

### SUMMARY OF INVENTION

Nevertheless, D2D communication is available only between closely-located radio terminals, and the use application (use case) thereof is limited.

It is therefore considered difficult to actually reduce the traffic load on a cellular communication network by utilizing D2D communication.

Thus, an object of the present invention is to enable traffic load on a cellular communication network to be reduced by utilizing D2D communication.

A mobile communication system according to a first aspect supports D2D communication being direct terminal-to-terminal communication. The mobile communication system comprises: a radio communication apparatus configured to receive a first control signal via first connection with a cellular communication network, and to perform the D2D communication with a neighboring radio terminal based on the first control signal. The radio communication apparatus includes: a network interface configured to receive downlink user data addressed to the neighboring radio terminal, via second connection different from the first connection; and a controller configured to perform D2D data relay of transmitting the downlink user data to the neighboring radio terminal through the D2D communication. D2D radio resources assignable to the D2D communication are part of uplink radio resources assigned to the mobile communication system. The cellular communication network includes a network apparatus configured to change a proportion of the D2D radio resources to the uplink radio resources.

A radio communication apparatus according to a second aspect is an apparatus in a mobile communication system supporting D2D communication being direct terminal-to-terminal communication, the radio communication apparatus receiving a first control signal via first connection with a cellular communication network, and performing the D2D communication with a neighboring radio terminal based on the first control signal. The radio communication apparatus comprises: a network interface configured to receive downlink user data addressed to the neighboring radio terminal, via second connection different from the first connection; and a controller configured to perform D2D data relay of transmitting the downlink user data to the neighboring radio terminal through the D2D communication. D2D radio resources assignable to the D2D communication are part of uplink radio resources assigned to the mobile communication system. A proportion of the D2D radio resources to the uplink radio resources is changed.

A network apparatus according to a third aspect is provided in a cellular communication network in a mobile communication system supporting D2D communication being direct terminal-to-terminal communication. The network apparatus includes: a controller configured to assign a radio resource for the D2D communication to a radio communication apparatus configured to receive a first control signal via first connection with the cellular communication network, and to perform the D2D communication with a neighboring radio terminal based on the first control signal. The D2D communication is used for performing D2D data relay of transmitting downlink user data received by the radio communication apparatus via second connection different from the first connection, from the radio communication apparatus to the neighboring radio terminal. D2D radio resources assignable to the D2D communication are part of uplink radio resources assigned to the mobile communication system. The controller changes a proportion of the D2D radio resources to the uplink radio resources.

A mobile communication system according to a fourth aspect supports D2D communication being direct terminal-to-terminal communication. The mobile communication system comprises: a mobile radio terminal configured to receive a first control signal from a base station, and to perform the D2D communication with a neighboring radio terminal based on the first control signal. The radio terminal includes: a network interface configured to receive downlink user data addressed to the neighboring radio terminal, via connection at an end that is different from connection with the base station that has been used in receiving the first control signal; and a controller configured to perform D2D data relay of transmitting the downlink user data to the neighboring radio terminal through the D2D communication.

A radio terminal according to a fifth aspect is a terminal for receiving a first control signal from a base station, and performing D2D communication being direct terminal-to-terminal communication, with a neighboring radio terminal based on the first control signal. The radio terminal comprises: a network interface configured to receive downlink user data addressed to the neighboring radio terminal, via connection at an end that is different from connection with the base station that has been used in receiving the first control signal; and a controller configured to perform D2D data relay of transmitting the downlink user data to the neighboring radio terminal through the D2D communication.

### BRIEF DESCRIPTION OF DRAWINGS

Fig. 1 is a configuration diagram of a Long Term Evolution (LTE) system according to an embodiment.
Fig. 2 is a block diagram of a user equipment (UE) according to the embodiment.
Fig. 3 is a block diagram of an evolved Node-B (eNB) according to the embodiment.
Fig. 4 is a protocol stack diagram of a radio interface according to the embodiment.
Fig. 5 is a configuration diagram of a radio frame according to the embodiment.
Fig. 6 is a diagram for illustrating an operation according to the embodiment.
Fig. 7 is a sequence diagram illustrating an operation specific example according to the embodiment.
Fig. 8 is a diagram for illustrating an operation according to a modified example of the embodiment.
Fig. 9 is a sequence diagram illustrating an operation according to the modified example of the embodiment.

### DESCRIPTION OF EMBODIMENTS

### [Overview of Embodiments]

A mobile communication system according to an embodiment supports D2D communication being direct terminal-to-terminal communication. The mobile communication system comprises: a radio communication apparatus configured to receive a first control signal via first connection with a cellular communication network, and to perform the D2D communication with a neighboring radio terminal based on the first control signal. The radio communication apparatus includes: a network interface configured to receive downlink user data addressed to the neighboring radio terminal, via second connection different from the first connection; and a controller configured to perform D2D data relay of transmitting the downlink user data to the neighboring radio terminal through the D2D communication. D2D radio resources assignable to the D2D communication are part of uplink radio resources assigned to the mobile communication system. The cellular communication network includes a network apparatus configured to change a proportion of the D2D radio resources to the uplink radio resources.

In an embodiment, in the D2D data relay, the controller transmits uplink user data received from the neighboring radio terminal, via the second connection.

In an embodiment, the first control signal includes assignment information indicating a radio resource to be assigned to the radio communication apparatus from among the D2D radio resources.

In an embodiment, the radio communication apparatus transmits a second control signal to the network apparatus via the first connection. In response to receiving the second control signal, the network apparatus transmits the first control signal including the assignment information, to the radio communication apparatus. The second control signal includes a D2D scheduling request for requesting assignment of a radio resource for the D2D communication, or a D2D buffer status report indicating an amount of user data waiting to be transmitted in the D2D communication.

In an embodiment, in a case in which the mobile communication system is an FDD communication system, the uplink radio resources are an uplink frequency band assigned to the mobile communication system.

In an embodiment, the network apparatus changes an amount of the D2D radio resources in the uplink radio resources based on at least one of a load status of the cellular communication network and the number of radio communication apparatuses performing the D2D communication.

In an embodiment, the cellular communication network includes a radio access network and a core network. The radio access network includes a base station. The core network includes a serving gateway. The controller establishes a logical communication path for forwarding the user data, between the radio communication apparatus and the serving gateway, or between the radio communication apparatus and the base station.

In an embodiment, before starting the D2D data relay, the controller transmits notification information about availability/unavailability of the D2D data relay, to the network apparatus, based on at least one of apparatus information associated with the radio communication apparatus, and user information associated with a user of the radio communication apparatus.

In an embodiment, the apparatus information is at least one of a connection status relating to the second connection, a connection status of the radio communication apparatus with respect to a power source, a battery remaining amount of the radio communication apparatus, and a moving status of the radio communication apparatus.

In an embodiment, the user information is at least one of information about agreement to the D2D data relay, and a status of ON/OFF of the D2D data relay that is set by a manual operation.

In an embodiment, the network apparatus that has received the notification information determines, based on the notification information, whether to switch a data path of the neighboring radio terminal from a first data path passing through the cellular communication network, to a second data path passing through the radio communication apparatus.

In an embodiment, the network apparatus that has determined to switch the data path transmits setting information for starting discovery processing for the D2D communication, to at least either one of the radio communication apparatus and the neighboring radio terminal.

In an embodiment, the controller transmits a discovery signal in discovery processing for the D2D communication. The discovery signal includes information indicating that the D2D data relay is available.

A radio communication apparatus according to an embodiment is an apparatus in a mobile communication system supporting D2D communication being direct terminal-to-terminal communication, the radio communication apparatus receiving a first control signal via first connection with a cellular communication network, and performing the D2D communication with a neighboring radio terminal based on the first control signal. The radio communication apparatus comprises: a network interface configured to receive downlink user data addressed to the neighboring radio terminal, via second connection different from the first connection; and a controller configured to perform D2D data relay of transmitting the downlink user data to the neighboring radio terminal through the D2D communication. D2D radio resources assignable to the D2D communication are part of uplink radio resources assigned to the mobile communication system. A proportion of the D2D radio resources to the uplink radio resources is changed.

A network apparatus according to an embodiment is provided in a cellular communication network in a mobile communication system supporting D2D communication being direct terminal-to-terminal communication. The network apparatus includes: a controller configured to assign a radio resource for the D2D communication to a radio communication apparatus configured to receive a first control signal via first connection with the cellular communication network, and to perform the D2D communication with a neighboring radio terminal based on the first control signal. The D2D communication is used for performing D2D data relay of transmitting downlink user data received by the radio communication apparatus via second connection different from the first connection, from the radio communication apparatus to the neighboring radio terminal. D2D radio resources assignable to the D2D communication are part of uplink radio resources assigned to the mobile communication system. The controller changes a proportion of the D2D radio resources to the uplink radio resources.

A mobile communication system according to an embodiment supports D2D communication being direct terminal-to-terminal communication. The mobile communication system comprises: a mobile radio terminal configured to receive a first control signal from a base station, and to perform the D2D communication with a neighboring radio terminal based on the first control signal. The radio terminal includes: a network interface configured to receive downlink user data addressed to the neighboring radio terminal, via connection at an end that is different from connection with the base station that has been used in receiving the first control signal; and a controller configured to perform D2D data relay of transmitting the downlink user data to the neighboring radio terminal through the D2D communication.

In an embodiment, the connection at the end is connection between the radio terminal and an apparatus directly connected to the radio terminal.

In an embodiment, the network interface can change the directly-connected apparatus.

In an embodiment, the connection at the end is radio connection.

In an embodiment, the connection at the end is connection with a base station different from the base station.

In an embodiment, in a case in which the connection at the end has been established by the network interface, the radio terminal transmits notification information indicating that the D2D data relay is available.

A mobile radio terminal according to an embodiment is a terminal for receiving a first control signal from a base station, and performing D2D communication being direct terminal-to-terminal communication, with a neighboring radio terminal based on the first control signal. The radio terminal comprises: a network interface configured to receive downlink user data addressed to the neighboring radio terminal, via connection at an end that is different from connection with the base station that has been used in receiving the first control signal; and a controller configured to perform D2D data relay of transmitting the downlink user data to the neighboring radio terminal through the D2D communication.

### [Embodiment]

An embodiment in a case in which the present invention is applied to a Long Term Evolution (LTE) system will be described below.

### (System Configuration)

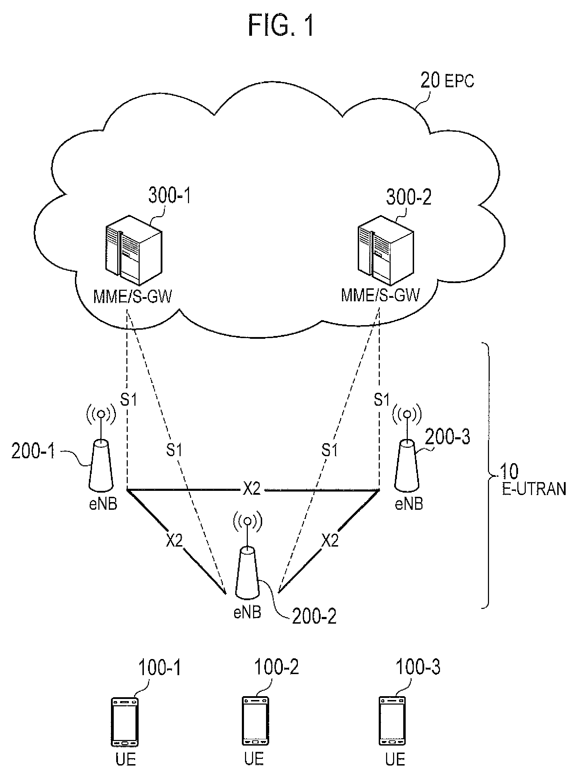

Fig. 1 is a configuration diagram of the LTE system according to the first embodiment. As illustrated in Fig. 1, the LTE system according to the first embodiment includes UEs (User Equipments) 100, E-UTRAN (Evolved Universal Terrestrial Radio Access Network) 10, and EPC (Evolved Packet Core) 20.

The UE 100 corresponds to the user terminal. The UE 100 is a mobile radio communication apparatus and performs radio communication with a cell (a serving cell). The configuration of the UE 100 will be described later.

The E-UTRAN 10 corresponds to a radio access network. The E-UTRAN 10 includes eNBs 200 (evolved Node-Bs). The eNB 200 corresponds to a base station. The eNBs 200 are connected mutually via an X2 interface. The configuration of the eNB 200 will be described later.

The eNB 200 manages one or more cells, and performs radio communication with the UE 100 that establishes a connection with the own cell. The eNB 200, for example, has a radio resource management (RRM) function, a routing function of user data, and a measurement control function for mobility control and scheduling. It is noted that the "cell" is used as a term indicating a minimum unit of a radio communication area, and is also used as a term indicating a function of performing radio communication with the UE 100.

The EPC 20 corresponds to a core network. The EPC 20 includes MME (Mobility Management Entity)/S-GW (Serving-Gateway) 300. The MME performs various mobility controls for the UE 100. The SGW performs transfer control of user data. The MME/S-GW 300 is connected to the eNB 200 via an S1 interface.

In the embodiment, the E-UTRAN 10 (radio access network) and the EPC 20 (core network) form a cellular communication network.

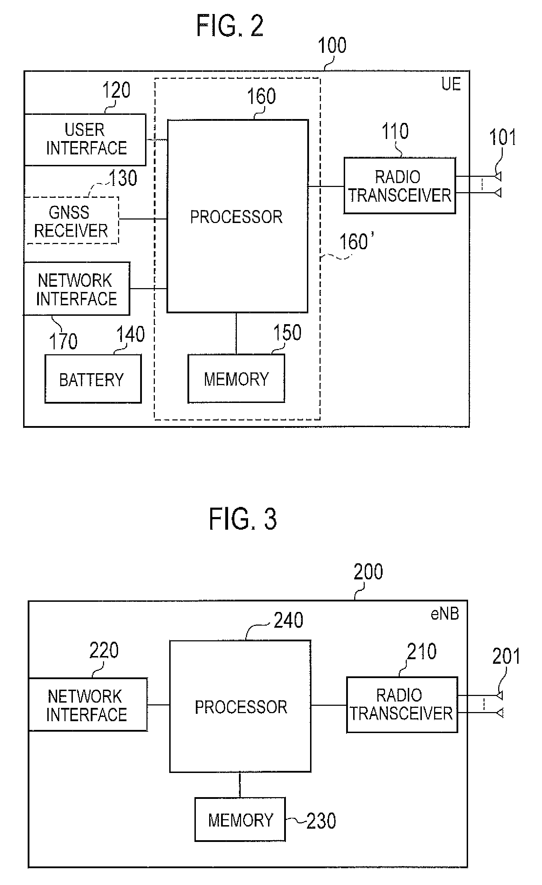

Fig. 2 is a block diagram of the UE 100. As illustrated in Fig. 2, the UE 100 includes a plurality of antennas 101, a radio transceiver 110, a user interface 120, a Global Navigation Satellite System (GNSS) receiver 130, a battery 140, a memory 150, a processor 160, and a network interface 170. The memory 150 and the processor 160 constitute a controller of the UE 100. The UE 100 does not have to include the GNSS receiver 130. In addition, the memory 150 may be integrated with the processor 160, and this set (i.e., a chipset) may be regarded as a processor 160'.

The antennas 101 and the radio transceiver 110 are used for the transmission and reception of radio signals. The radio transceiver 110 converts baseband signals (transmission signals) output by the processor 160, into radio signals, and transmits the radio signals from the antennas 101. In addition, the radio transceiver 110 converts radio signals received by the antennas 101, into baseband signals (reception signals), and outputs the baseband signals to the processor 160.

The user interface 120 is an interface with a user carrying the UE 100, and includes, for example, a display, a microphone, a loudspeaker, and various types of buttons. The user interface 120 receives an operation from the user, and outputs a signal indicating the detail of the operation, to the processor 160. For obtaining location information indicating a geographical location of the UE 100, the GNSS receiver 130 receives a GNSS signal, and outputs the received signal to the processor 160. The battery 140 stores power to be supplied to each block of the UE 100.

The memory 150 stores a program to be executed by the processor 160, and information to be used in processing performed by the processor 160. The processor 160 includes a baseband processor that performs modulation/demodulation and encoding/decoding of a baseband signal, and the like, and a central processing unit (CPU) that executes programs stored in the memory 150, to perform various types of processing. The processor 160 may further include a codec that performs encoding/decoding of an audio/video signal. The processor 160 executes various types of processing and various types of communication protocols that are to be described later.

The network interface 170 is connected to a predetermined network (predetermined apparatus) different from the cellular communication network, in a wired or wireless manner. In the embodiment, a network to which the network interface 170 is connected is a cable communication network. The cable communication network is an optical line network, an Ethernet (registered trademark) line network, a cable television (CATV) line network, or a telephone line network, or a combination of these networks.

Fig. 3 is a block diagram of the eNBs 200. As illustrated in Fig. 3, the eNB 200 includes an antenna 201, a radio transceiver 210, a network interface 220, a memory 230, and a processor 240. The memory 230 and the processor 240 constitute a controller of the eNB 200.

The antenna 201 and the radio transceiver 210 are used for the transmission and reception of radio signals. The radio transceiver 210 converts a baseband signal (transmission signal) output by the processor 240, into a radio signal, and transmits the radio signal from the antenna 201. In addition, the radio transceiver 210 converts a radio signal received by the antenna 201, into a baseband signal (reception signal), and outputs the baseband signal to the processor 240.

The network interface 220 is connected to an adjacent eNB 200 via the X2 interface, and connected to the MME/S-GW 300 via the S1 interface. The network interface 220 is used for communication performed on the X2 interface and communication performed on the S1 interface.

The memory 230 stores a program to be executed by the processor 240, and information to be used in processing performed by the processor 240. The processor 240 includes a baseband processor that performs modulation/demodulation and encoding/decoding of a baseband signal, and the like, and a CPU that executes programs stored in the memory 230, to perform various types of processing. The processor 240 executes various types of processing and various types of communication protocols that are to be described later.

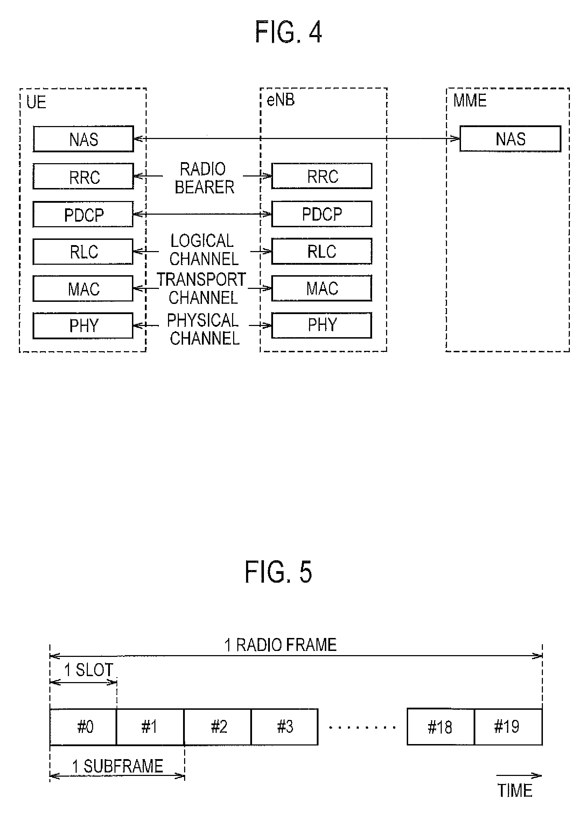

Fig. 4 is a protocol stack diagram of a radio interface in the mobile communication system. As illustrated in Fig. 4, a radio interface protocol is separated into first to third layers of an Open Systems Interconnection (OSI) reference model. The first layer is a physical (PHY) layer. The second layer includes a medium access control (MAC) layer, a radio link control (RLC) layer, and a packet data convergence protocol (PDCP) layer. The third layer includes a radio resource control (RRC) layer.

The PHY layer performs encoding/decoding, modulation/demodulation, antenna mapping/demapping, and resource mapping/demapping. Between the PHY layer of the UE 100 and the PHY layer of the eNB 200, user data and a control signal are transmitted via a physical channel.

The MAC layer performs data priority control, a retransmission process using a hybrid automatic repeat request (ARQ) (HARQ), and the like. Between the MAC layer of the UE 100 and the MAC layer of the eNB 200, user data and a control signal are transmitted via a transport channel. The MAC layer of the eNB 200 includes a scheduler for deciding (scheduling) a transport format (transport block size and modulation and coding schemes) of an uplink and a downlink, and a resource block assigned to the UE 100.

The RLC layer transmits data to an RLC layer on a reception side using the functions of the MAC layer and the PHY layer. Between the RLC layer of the UE 100 and the RLC layer of the eNB 200, user data and a control signal are transmitted via a logical channel.

The PDCP layer performs header compression/decompression, and encryption/decryption.

The RRC layer is defined only in a control plane handling control signals. Between the RRC layer of the UE 100 and the RRC layer of the eNB 200, control signals (an RRC message) for various settings are transmitted. The RRC layer controls the logical channel, the transport channel, and the physical channel in response to establishment, re-establishment, and release of a radio bearer. If there is connection (RRC connection) between the RRC of the UE 100 and the RRC of the eNB 200, the UE 100 is in a connected state. If not, the UE 100 is in an idle state.

A non-access stratum (NAS) layer located above the RRC layer performs session management, mobility management, and the like.

Fig. 5 is a configuration diagram of a radio frame used in the mobile communication system. In the mobile communication system, orthogonal frequency division multiple access (OFDMA) and single carrier frequency division multiple access (SC-FDMA) are applied to a downlink (DL) and an uplink (UL), respectively. Frequency Division Duplex (FDD) or Time Division Duplex (TDD) is applied as a duplex scheme. In the embodiment, the FDD is mainly assumed.

As illustrated in Fig. 5, a radio frame is constituted by 10 subframes arranged in a time direction. Each subframe is constituted by 2 slots arranged in the time direction. The length of each subframe is 1 ms, and the length of each slot is 0.5 ms. Each subframe includes a plurality of resource blocks (RBs) in a frequency direction, and a plurality of symbols in the time direction. Each resource block includes a plurality of subcarriers in the frequency direction. A resource element is constituted by 1 subcarrier and 1 symbol.

Among radio resources assigned to the UE 100, a frequency resource is constituted by resource blocks and a time resource is constituted by subframes (or slots).

In a downlink, a section corresponding to beginning several symbols of each subframe is a region used as a physical downlink control channel (PDCCH) for transmitting mainly a downlink control signal. In addition, a remaining part of each subframe is a region that can be used as a physical downlink shared channel (PDSCH) for transmitting mainly downlink user data.

In an uplink, both end portions in the frequency direction of each subframe are regions used as a physical uplink control channel (PUCCH) for transmitting mainly an uplink control signal. A remaining part of each subframe is a region that can be used as a physical uplink shared channel (PUSCH) for transmitting mainly uplink user data.

### (D2D Communication)

The mobile communication system according to the embodiment supports D2D communication, which is direct terminal-to-terminal communication (UE-to-UE communication). The description will now be given based on the comparison between D2D communication and cellular communication, which is normal communication of the mobile communication system.

The cellular communication is a communication mode in which a data path passes through a cellular communication network (E-UTRAN 10, EPC 20). The data path is a transmission path of user data.

In contrast, D2D communication is a communication mode in which a data path set between UEs does not pass through a network. A plurality of UEs 100 located close to each other directly transmits and receives user data with low transmission power. Since radio communication is performed between closely-located UEs, high-speed communication can be realized.

In the embodiment, at least part of an uplink frequency band assigned to the mobile communication system is used for D2D communication. In addition, to avoid interference between D2D communication and cellular communication, in the uplink frequency band assigned to the mobile communication system, a radio resource (D2D radio resource) assignable to D2D communication is secured separately from a radio resource assignable to cellular uplink communication. The D2D radio resource may also be referred to as a D2D resource pool.

To enable D2D communication, the UE 100 may perform terminal discovery processing (discovery processing) for searching for a neighboring UE. The discovery processing is processing of identifying (discovering) a neighboring UE after establishing synchronization with the neighboring UE. In the discovery processing, a synchronization signal for establishing synchronization with the neighboring UE is transmitted and received. In addition, in the discovery processing, a discovery signal (discovery signal) for identifying (discovering) a neighboring UE may be transmitted and received.

### (Operation According to Embodiment)

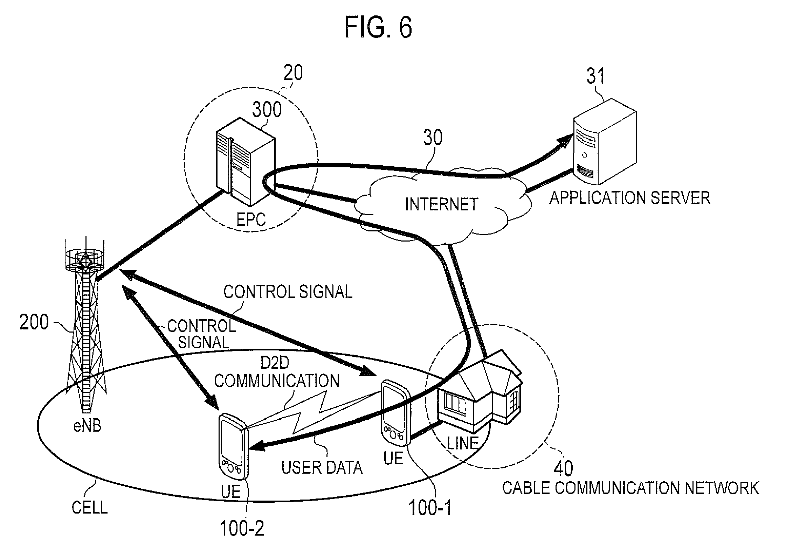

Fig. 6 is a diagram for illustrating an operation according to the embodiment. As illustrated in Fig. 6, in the mobile communication system according to the embodiment, in addition to the cellular communication network (E-UTRAN 10, EPC 20), a cable communication network 40 different from the cellular communication network is used.

The cable communication network 40 is connected to an Internet 30. In addition, the EPC 20 is also connected to the Internet 30. Furthermore, an application server 31 is connected to the Internet 30. The application server 31 is, for example, an web server, a video delivery server, or the like.

The eNB 200 manages a cell. UEs 100-1 and 100-2 exist in the cell of the eNB 200. The UEs 100-1 and 100-2 are located close to each other, and perform D2D communication. In addition, in the following description, the UEs 100-1 and 100-2 will be simply described as the UE 100 unless otherwise specially distinguished.

In addition, the UE 100 establishes RRC connection with the eNB 200, and transmits and receives a control signal to and from the eNB 200. The control signals include a first control signal (downlink control signal) transmitted from the eNBs 200 to the UE 100, and a second control signal (an uplink control signal) transmitted from the UE 100 to the eNB 200. In addition, in the embodiment, the UE 100 is assumed to be in the connected state. Alternatively, the UE 100 may be in the idle state. In addition, in the embodiment, the first control signal is assumed to be a unicast signal individually transmitted for each UE. Alternatively, the first control signal may be a broadcast signal (system information). The connection between the UE 100 and the eNB 200 will be conveniently referred to as "first connection". When the UE 100 is in the connected state, the first connection may be the RRC connection. When the UE 100 is in the idle state, the first connection may be connection in a lower layer than the RRC layer.

The UE 100-1 receives the first control signal from the eNB 200 via the first connection, and performs D2D communication with the UE 100-2 based on the first control signal. The UE 100-2 receives the first control signal from the eNB 200, and performs D2D communication with the UE 100-1 based on the first control signal.

The UE 100-1 is connected to the cable communication network 40. The connection between the UE 100 and the cable communication network 40 will be conveniently referred to as "second connection (connection at an end)". The second connection (connection at the end) is connection between the UE 100 and an apparatus directly connected to the UE 100. In the embodiment, the apparatus directly connected to the UE 100 is the cable communication network 40 (specifically, a router or the like that is included in the cable communication network 40).

Via the second connection, the UE 100-1 receives user data (downlink user data) addressed to the UE 100-2, from the cable communication network 40. In the embodiment, the user data addressed to the UE 100-2 is transmitted from the application server 31, and received by the UE 100-2 via the EPC 20 and the cable communication network 40.

The UE 100-1 performs D2D data relay of transmitting the user data received from the cable communication network 40, to the UE 100-2 through D2D communication. The UE 100-2 receives the user data transmitted from the UE 100-1. In this manner, an application of the UE 100-2 obtains data (user data) delivered from the application server 31. The user data can be large-capacity data such as video data. By transmitting such large-capacity data from the UE 100-1 to the UE 100-2, traffic load on the cellular communication network (in particular, the consumed amount of a cellular downlink radio resource) can be substantially reduced as compared with a case of transmitting large-capacity data from the eNB 200.

In the D2D data relay, the UE 100-1 transmits user data (uplink user data) received from the UE 100-2, to the cable communication network 40 via the second connection. Thus, traffic load on the cellular communication network (in particular, the consumed amount of a cellular uplink radio resource) can be reduced as compared with a case of transmitting the user data from the UE 100-2 to the eNB 200.

The first control signal includes assignment information (hereinafter, referred to as "D2D assignment information") indicating a radio resource assigned to D2D communication. The UE 100 performs D2D communication using the radio resource indicated by the D2D assignment information.

In the embodiment, a case in which D2D communication resource assignment is dynamically performed is assumed. For example, D2D assignment information is transmitted on the PDCCH from the eNBs 200 to the UE 100. In addition, the UE 100 transmits the second control signal to the eNB 200 via the first connection. In response to receiving the second control signal, the eNB 200 transmits the first control signal including the D2D assignment information, to the UE 100.

The second control signal includes a D2D scheduling request (SR) for requesting assignment of a radio resource for D2D communication. Based on this request, the eNB 200 can assign a radio resource to D2D communication as necessary. Alternatively, the second control signal includes a D2D buffer status report (BSR) indicating the amount of user data waiting to be transmitted in D2D communication. Based on this report, the eNB 200 can assign a necessary amount of radio resources to D2D communication.

As described above, radio resources (D2D radio resources) assignable to D2D communication are at least part of the uplink frequency band assigned to the mobile communication system. In many cases, the degree of resource shortage in the uplink frequency band is lower than that in a downlink frequency band. Thus, by using the uplink frequency band for D2D communication (D2D data relay), the uplink frequency band can be effectively utilized.

Based on at least one of the load status of the eNB 200 itself, the number of UEs 100 performing D2D communication in an own cell, the number of UEs 100 having D2D data relay capacity in the own cell, notification information to be described later, and the status of the above-described second control signal (the number of the above-described SRs, a total data amount indicated by the above-described BSR), the eNB 200 changes a proportion of radio resources assignable to D2D communication in the uplink frequency band. "The proportion of radio resources assignable to D2D communication in the uplink frequency band" may be a proportion of time resources assignable to D2D communication, to time resources (e.g., a plurality of subframes) included in the uplink frequency band, or may be a proportion of frequency resources assignable to D2D communication, to frequency resources (e.g., a plurality of resource blocks) included in the uplink frequency band. In addition, a radio resource assignable to D2D communication may be a dedicated radio resource secured for D2D communication, or may be a common radio resource shared with cellular communication.

For example, in response to at least one of the load on the eNB 200 itself becoming higher than a predetermined level and the number of UEs 100 performing D2D communication in the own cell becoming larger than a predetermined number, the eNB 200 increases a proportion of radio resources assignable to D2D communication in the uplink frequency band. In addition, the load status of the eNB 200 refers to a usage ratio of cellular radio resources, the number of UEs performing cellular communication, or the like. By optimizing a proportion of radio resources assignable to D2D communication in the uplink frequency band in this manner, the uplink frequency band can be utilized further effectively.

In the embodiment, before starting D2D communication (D2D data relay), based on at least one of apparatus information associated with the UE 100-1 and user information associated with the user of the UE 100-1, the UE 100-1 transmits notification information about availability/unavailability of D2D data relay, to the eNBs 200. The apparatus information is at least one of a connection status of the UE 100-1 with respect to the cable communication network 40, a connection status of the UE 100-1 with respect to a power source, a battery remaining amount of the UE 100-1, a moving status of the UE 100-1, and presence or absence of D2D data relay capacity. The UE 100-1 holds the apparatus information, and updates the held apparatus information as necessary. The user information is at least one of information about agreement to the D2D data relay, and a status of ON/OFF of the D2D data relay that is set by a manual operation.

The eNB 200 that has received the notification information determines, based on the notification information, whether to cause the UE 100-1 to start D2D communication (D2D data relay). In the embodiment, the eNB 200 determines whether to switch a data path of the UE 100-2, from a first data path passing through the eNB 200, to a second data path passing through the UE 100-1.

In the embodiment, the notification information is information indicating that D2D data relay is available. In this case, the UE 100-1 determines whether to transmit the notification information. For example, based on at least one of the UE 100-1 having connected to the cable communication network 40, the UE 100-1 having connected to the power source, the battery remaining amount of the UE 100-1 being large, and the UE 100-1 being at rest, the UE 100-1 determines to transmit the notification information. In contrast, based on at least one of the UE 100-1 not connecting to the cable communication network 40, the UE 100-1 not connecting to the power source, the battery remaining amount of the UE 100-1 being small, and the UE 100-1 being moving, the UE 100-1 determines not to transmit the notification information. Furthermore, based on at least one of the user agreeing to D2D data relay and D2D data relay being set to ON by a manual operation, the UE 100-1 determines to transmit the notification information. In contrast, based on at least one of the user not agreeing to D2D data relay and D2D data relay being set to OFF by a manual operation, the UE 100-1 determines not to transmit the notification information. The notification information includes identification information of the UE 100-1 (e.g., a cell radio network temporary identifier (C-RNTI) or an international mobile subscriber identity (IMSI)).

Alternatively, the above-described determination may be performed on the eNB 200 side. In this case, the notification information is information including apparatus information and/or user information. For example, based on at least one of the UE 100-1 having connected to the cable communication network 40, the UE 100-1 having connected to the power source, the battery remaining amount of the UE 100-1 being large, and the UE 100-1 being at rest, the eNB 200 determines to switch a data path. In contrast, based on at least one of the UE 100-1 not connecting to the cable communication network 40, the UE 100-1 not connecting to the power source, the battery remaining amount of the UE 100-1 being small, and the UE 100-1 being moving, the eNB 200 determines not to switch a data path. Furthermore, based on at least one of the user agreeing to D2D data relay and D2D data relay being set to ON by a manual operation, the eNB 200 determines to switch a data path. In contrast, based on at least one of the user not agreeing to D2D data relay and D2D data relay being set to OFF by a manual operation, the eNB 200 determines not to switch a data path.

When the eNB 200 determines to switch a data path, the eNB 200 transmits setting information for starting the discovery processing, to at least either one of the UEs 100-1 and 100-2. The setting information includes at least one setting parameter of a radio resource to be used for transmitting a discovery signal, a signal sequence of a discovery signal, and transmission power of a discovery signal. The setting information may include a setting parameter for performing setting so as to include information indicating that D2D data relay is available, in a discovery signal. In response to receiving the setting information, the UE 100-1 transmits a discovery signal. The discovery signal transmitted by the UE 100-1 includes information indicating that D2D data relay is available. Based on the information, the UE 100-2 that has received the discovery signal can recognize that the UE 100-1 can perform D2D data relay.

### (Operation Specific Example)

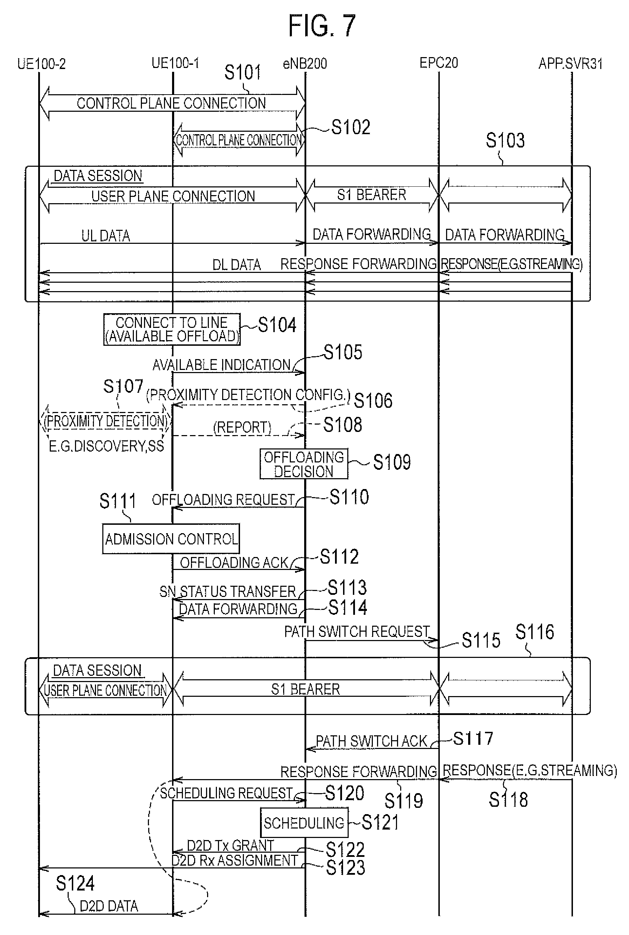

Fig. 7 is a sequence diagram illustrating an operation specific example according to the embodiment.

As illustrated in Fig. 7, in step S101, the UE 100-2 establishes RRC connection with the eNB 200. More specifically, the UE 100-2 establishes control plane connection (control radio bearer) for transmitting and receiving control signals to and from the eNB 200.

In step S102, the UE 100-1 establishes RRC connection with the eNB 200. More specifically, the UE 100-1 establishes control plane connection (control radio bearer) for transmitting and receiving control signals to and from the eNB 200.

In step S103, the UE 100-2 performs data transmission and reception with the application server 31 using cellular communication performed via the cellular communication network. More specifically, the first data path is set between the UE 100-1 and the application server 31, and the first data path includes user plane connection (data radio bearer) between the UE 100-2 and the eNBs 200, and S1 connection (S1-U bearer) established between the eNB 200 and the EPC 20 (S-GW 300). User data transmitted by the UE 100-2 is forwarded to the application server 31 on the first data path. In addition, user data transmitted by the application server 31 is forwarded to the UE 100-2 on the first data path.

In step S104, the UE 100-1 is connected to the cable communication network 40. In the embodiment, a case in which the user carrying the UE 100-1 connects the UE 100-1 to the cable communication network 40 is assumed.

In step S105, the UE 100-1 may transmit notification information (available Indication) indicating that D2D data relay is available, to the eNB 200. In addition, the UE 100-1 may transmit the notification information to the eNB 200 as a response to inquiry from the eNB 200. "The inquiry from the eNB 200" may be transmitted by broadcast (e.g., system information block (SIB)), or may be transmitted by unicast (e.g., individual RRC signaling). In the case of broadcast, the eNB 200 may transmit an SIB including a flag for inquiring whether D2D data relay is available. Then, after receiving the SIB, the UE 100-1 capable of performing D2D data relay includes the notification information in an RRC connection establishment message or an RRC resetting completion message, and transmits the message. In the case of unicast, the eNB 200 may receive, from a UE 100-1, UE capability information indicating whether the UE 100-1 has a function of D2D data relay, identify a UE 100-1 (candidate UE) having the function of D2D data relay, based on the UE capability information, and individually inquire of the identified UE 100-1. Based on the notification information, the eNB 200 determines to switch a data path of the UE 100-2, and starts control for switching the data path of the UE 100-2.

In step S106, the eNB 200 may transmit setting information (proximity detection config.) for starting the discovery processing, to the UE 100-1. In addition, the eNB 200 may transmit the setting information (proximity detection config.) to the UE 100-2 as well.

In step S107, the UE 100-1 transmits a discovery signal in response to receiving the setting information. Along with the transmissions start of the discovery signal, the UE 100-1 may start transmitting a D2D synchronization signal for establishing synchronization. The discovery signal transmitted by the UE 100-1 may include information indicating that D2D data relay is available. The UE 100-2 that has received the discovery signal from the UE 100-1 transmits a response signal to the UE 100-1. Based on the response signal, the UE 100-1 discovers the UE 100-2 being a neighboring UE.

In step S108, the UE 100-1 that has discovered the UE 100-2 transmits a report about the discovered UE 100-2, to the eNB 200.

In step S109, based on the report, the eNB 200 decides to switch a data path of the UE 100-2, from the first data path passing through the eNB 200, to the second data path passing through the UE 100-1. Through such switching, reduction in the load on the eNB 200 (offload) is achieved.

In addition, processing in steps S107 to S109 can be modified in the following manner. More specifically, each of the UEs 100-1 and 100-2 receives a D2D synchronization signal, and transmits a report about the received D2D synchronization signal to the eNB 200, and the eNB 200 performs the determination in step S109 based on the report and a current communication status. In this case, step S108 can be omitted.

In step S110, the eNB 200 transmits a D2D data relay execution request (an offloading request) to the UE 100-1. Together with the execution request (offloading request), the eNB 200 may transmit a tunnel endpoint identifier (TEID) (S-GW ID) of a corresponding E-RAB (bearer), a bearer type (division bearer, non division bearer), and the like.

In step S111, the UE 100-1 determines whether to admit the execution request. The description will now be given assuming that the UE 100-1 has determined to admit the execution request.

In step S112, the UE 100-1 transmits positive acknowledge (offloading ACK) indicating that the UE 100-1 admits the execution request, to the eNBs 200. The positive acknowledge (offloading ACK) may include new setting information (reconfiguration information) for the UE 100-2. In this case, the setting information may include information indicating that D2D is used (bearer passes through D2D).

In addition, processing in steps S110 to S112 can be modified in the following manner so as to eliminate the need for the determination in the UE 100-1. More specifically, in step S110, the eNB 200 transmits an RRC connection reconfiguration message for executing D2D data relay, to the UE 100-1. The UE 100-1 transmits an RRC connection reconfiguration complete message to the eNB 200 without performing determination in step S111.

In step S113, in response to the positive acknowledge (or the RRC connection reconfiguration complete message), the eNB 200 transmits notification (SN Status Transfer) indicating a status of data forwarding to the UE 100-2, to the UE 100-1.

In step S114, the eNB 200 forwards data not transmitted to the UE 100-2, to the UE 100-1 (data forwarding).

In step S115, the eNB 200 transmits a switch request (path switch request) for requesting data path switch from the eNB 200 to the UE 100-1, to the EPC 20. The switch request may be the one requesting switch of a data path relating to a specific bearer. In response to the switch request, the eNB 200 performs control of switching a data path from the eNB 200 to the UE 100-1.

In step S116, the second data path is set between the UE 100-1 and the application server 31. The second data path includes user plane connection (data radio bearer) between the UEs 100-1 and 100-2, and S1 connection (S1-U bearer) established between the UE 100-1 and the EPC 20 or GPRS Tunneling Protocol for User Plane (GTP-U) tunneling connection.

In step S117, the EPC 20 transmits positive acknowledge (path switch ACK) in response to the switch request (path switch request), to the eNB 200.

In step S118, the application server 31 transmits user data addressed to the UE 100-2, to the EPC 20.

In step S 119, the EPC 20 forwards the user data addressed to the UE 100-2, to the UE 100-1.

In step S120, in response to receiving the user data addressed to the UE 100-2, the UE 100-1 transmits a D2D scheduling request (scheduling request) to the eNB 200.

In step S121, in response to the D2D scheduling request, the eNB 200 decides (schedules) a radio resource to be assigned for D2D communication of the UEs 100-1 and 100-2, from among radio resources assignable to D2D communication.

In step S122, the eNB 200 transmits D2D transmission grant (D2D Tx grant) including D2D assignment information, to the UE 100-1.

In step S123, the eNB 200 may transmit D2D reception assignment (D2D Rx assignment) including D2D assignment information, to the UE 100-2. Alternatively, the eNB 200 may transmit information about a radio resource assignable to D2D reception (D2D reception resource pool), to the UE 100-2.

In step S124, using the radio resource assigned from the eNB 200, the UE 100-1 transmits the user data addressed to the UE 100-2, to the UE 100-2. Using the radio resource assigned from the eNB 200, the UE 100-2 receives the user data addressed to the UE 100-2 itself, from the UE 100-1. In this manner, the UE 100-2 receives data from the application server 31 using D2D communication (D2D data relay).

### (Summing-Up of Embodiment)

As described above, the UE 100-1 performs D2D data relay of transmitting the user data received from the cable communication network 40, to the UE 100-2 through D2D communication. The UE 100-2 receives the user data transmitted from the UE 100-1. The user data can be large-capacity data such as video data. By transmitting such large-capacity data from the UE 100-1 to the UE 100-2, traffic load on the cellular communication network (in particular, the consumed amount of a cellular downlink radio resource) can be substantially reduced as compared with a case of transmitting large-capacity data from the eNB 200.

### [Modified Example]

In the above-described embodiment, a logical communication path (S1-U interface) for forwarding user data is set between the UE 100-1 and the EPC 20. In contrast, in a modified example of the embodiment, a logical communication path (Xn-U interface or X2-U interface) for forwarding user data is established between the UE 100-1 and the eNB 200.

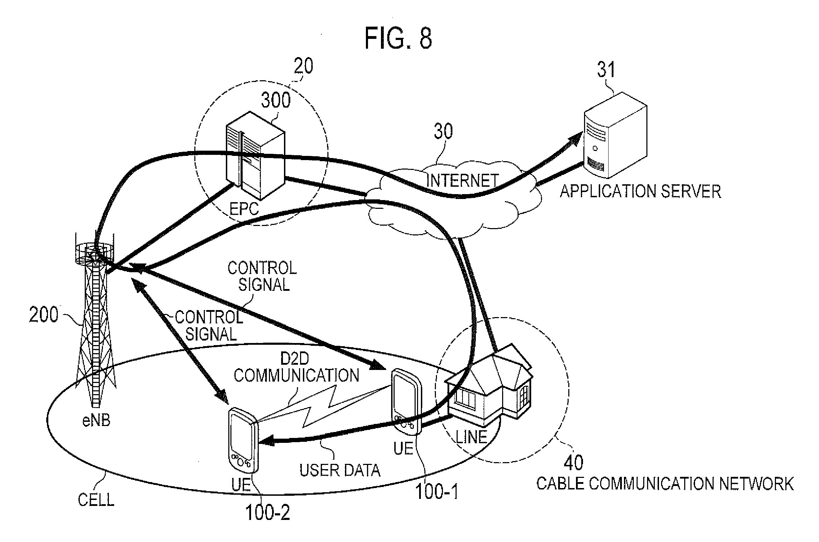

Fig. 8 is a diagram for illustrating an operation according to the modified example of the embodiment. As illustrated in Fig. 8, a logical communication path (Xn-U interface) for forwarding user data is established between the UE 100-1 and the eNB 200. The user data addressed to the UE 100-2 is transmitted from the application server 31, and received by the UE 100-2 via the EPC 20, the eNB 200, and the cable communication network 40. In addition, user data addressed to the application server 31 is transmitted from the UE 100-2, and received by the application server 31 via the EPC 20, the eNB 200, and the cable communication network 40.

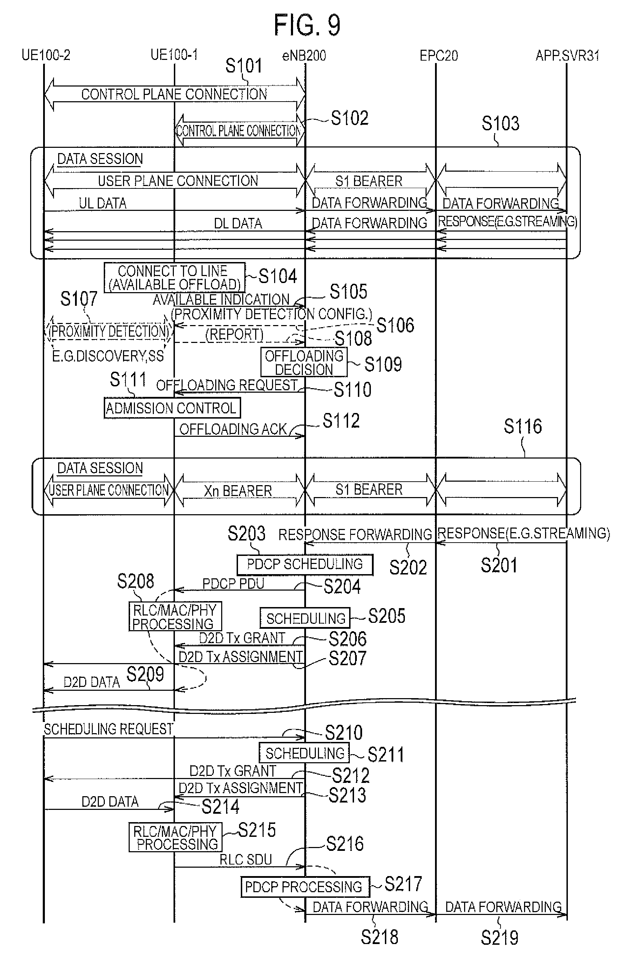

Fig. 9 is a sequence diagram illustrating an operation according to the modified example of the embodiment. Steps S101 to S1 12 are similar to those in the above-described embodiment. Thus, operations in step S116 and subsequent steps will be described.

As illustrated in Fig. 9, in step S116, a second data path is set between the UE 100-1 and the application server 31. The second data path includes user plane connection (data radio bearer) between the UEs 100-1 and 100-2, Xn connection (Xn-U bearer) established between the UE 100-1 and the eNB 200, and S1 connection (S1-U bearer) established between the eNB 200 and the EPC 20.

In step S201, the application server 31 transmits user data addressed to the UE 100-2, to the EPC 20.

In step S202, the EPC 20 forwards the user data addressed to the UE 100-2, to the eNB 200.

In step S203, the eNB 200 generates a PDCP protocol data unit (PDU) by processing the user data addressed to the UE 100-2, in a PDC layer.

In step S204, the eNB 200 forwards the generated PDCP PDU to the UE 100-1.

In step S205, the eNB 200 decides (schedules) a radio resource to be assigned for D2D communication of the UEs 100-1 and 100-2, from among radio resources assignable to D2D communication.

In step S206, the eNB 200 transmits D2D transmission grant (D2D Tx grant) including D2D assignment information, to the UE 100-1.

In step S207, the eNB 200 may transmit D2D reception assignment (D2D Rx assignment) including D2D assignment information, to the UE 100-2. Alternatively, the eNB 200 may transmit information about a radio resource assignable to D2D reception (D2D reception resource pool), to the UE 100-2.

Meanwhile, the UE 100-1 processes the user data (PDCP PDU) forwarded from the eNB 200, in the RLC layer, the MAC layer, and the PHY layer (step S208). In step S209, using the radio resource assigned from the eNB 200, the UE 100-1 transmits the user data addressed to the UE 100-2, to the UE 100-2. Using the radio resource assigned from the eNB 200, the UE 100-2 receives the user data addressed to the UE 100-2 itself, from the UE 100-1. In this manner, the UE 100-2 receives data from the application server 31 using D2D communication (D2D data relay).

Subsequently, transmission from the UE 100-2 to the application server 31 will be described. In step S210, the UE 100-2 transmits a D2D scheduling request (scheduling request) to the eNB 200.

In step S211, in response to the D2D scheduling request, the eNBs 200 decides (schedules) a radio resource to be assigned for D2D communication of the UEs 100-1 and 100-2, from among radio resources assignable to D2D communication.

In step S212, the eNB 200 transmits D2D transmission grant (D2D Tx grant) including D2D assignment information, to the UE 100-2.

In step S213, the eNB 200 may transmit D2D reception assignment (D2D Rx assignment) including D2D assignment information, to the UE 100-1. Alternatively, the eNBs 200 may transmit information about a radio resource assignable to D2D reception (D2D reception resource pool), to the UE 100-1.

In step S214, using the radio resource assigned from the eNBs 200, the UE 100-2 transmits the user data addressed to the application server 31, to the UE 100-1. Using the radio resource assigned from the eNB 200, the UE 100-1 receives the user data addressed to the application server 31, from the UE 100-2.

In step S215, the UE 100-1 processes the user data received from the UE 100-2, in the PHY layer, the MAC layer, and the RLC layer, and generates an RLC service data unit (SDU).

In step S216, the UE 100-1 forwards the generated RLC SDU to the eNB 200.

In step S217, the eNB 200 processes the RLC SDU forwarded from the UE 100-1, in the PDCP layer.

In step S218, the eNB 200 forwards the user data processed in the PDCP layer, to the EPC 20.

In step S219, the EPC 20 forwards the user data received from the eNBs 200, to the application server 31.

### [Other Embodiments]

In the above-described embodiment, the description has been mainly given of the case of forwarding user data from the application server 31 to the UE 100-2 via the UE 100-1. Alternatively, user data may be forwarded from the UE 100-2 to the application server 31 via the UE 100-1.

In the above-described embodiment, the description has been given of an example case in which the network interface 170 provided in the UE 100 is connected to the cable communication network 40. Nevertheless, the network interface 170 may be connected to a radio communication network other than the cellular communication network. The radio communication network other than the cellular communication network is a wireless personal area network (PAN) line (e.g., ultra-wideband (UWB)) network, a wireless local area network (LAN) line network, a wireless metropolitan area network (MAN) line (e.g., WMAX) network, a satellite line network, or a microwave line network, or a combination of these networks. In this case, the second connection is not cable connection but radio connection.

Alternatively, the network interface 170 may be directly connected to the cellular communication network. In this case, the second connection may be cable connection or may be radio connection. For example, in Fig. 6, the network interface 170 of the UE 100-1 may be connected to the eNB 200 or the EPC 20 (S-GW 300) instead of the cable communication network 40. Alternatively, in Fig. 6, the network interface 170 of the UE 100-1 may be connected to an eNB different from the eNB 200.

In the above-described embodiment, a case in which the user carrying the UE 100-1 temporarily connects the UE 100-1 to the cable communication network 40 has been assumed. Nevertheless, an operator of the cellular communication network may manage the UE 100-1, and the operator may permanently connect the UE 100-1 to the cable communication network 40. In this case, the UE 100-1 is operated as an ultrasmall cell. In such an operation method, the UE 100-1 does not have to include the user interface 120, the GNSS receiver 130, and the battery 140.

In addition, the UE 100-1 (and the EPC 20) may encrypt user data of the UE 100-2 for ensuring confidentiality (security) of communication in a network other than the cellular communication network. Furthermore, the EPC 20 may authenticate the UE 100-1 having connected to a network other than the cellular communication network, or authenticate the UE 100-2 performing D2D communication with the UE 100-1.

In the above-described embodiment, the description has been given of an example case in which, in the uplink frequency band, a radio resource (D2D radio resource) assignable to D2D communication is secured separately from a radio resource assignable to cellular uplink communication. Nevertheless, in the uplink frequency band, a radio resource assignable to D2D communication and a radio resource assignable to cellular uplink communication may share a common radio resource.

In addition, a radio resource assignable to D2D communication may be secured in a specific frequency band other than the uplink frequency band. The specific frequency band is, for example, a frequency band for public safety, a frequency band not requiring a license (unlisenced band), or a frequency band in which a license is shared by a plurality of operators (shared license spectrum). In this case, it is preferable to apply, to D2D communication, carrier sense (listen-before-talk) for autonomously avoiding interference. More specifically, the UE 100-1 and/or the UE 100-2 have/has a function of carrier sense, and decide(s) a radio resource to be used for D2D communication, based on a result of carrier sense.

In addition, the eNB 200 does not have to autonomously set a radio resource assignable to D2D communication, and the eNB 200 may set the radio resource according to an instruction or notification from the EPC 20.

In addition, in the above-described embodiment, an LTE system has been described as an example of a mobile communication system. The mobile communication system, however, is not limited to the LTE system. The present invention may be applied to a system other than the LTE system.

### [Cross-Reference]

Japanese Patent Application No. 2013-264617 (filed December 20, 2013) is incorporated by reference herein in its entirety.

### INDUSTRIAL APPLICABILITY

The present invention is useful in a mobile communication field.

## Claims

1. A mobile communication system supporting D2D communication being direct terminal-to-terminal communication, the mobile communication system comprising:
a radio communication apparatus configured to receive a first control signal via first connection with a cellular communication network, and to perform the D2D communication with a neighboring radio terminal based on the first control signal, wherein
the radio communication apparatus includes:
a network interface configured to receive downlink user data addressed to the neighboring radio terminal, via second connection different from the first connection; and
a controller configured to perform D2D data relay of transmitting the downlink user data to the neighboring radio terminal through the D2D communication, wherein
D2D radio resources assignable to the D2D communication are part of uplink radio resources assigned to the mobile communication system, and
the cellular communication network includes a network apparatus configured to change a proportion of the D2D radio resources to the uplink radio resources.

2. The mobile communication system according to claim 1, wherein
in the D2D data relay, the controller transmits uplink user data received from the neighboring radio terminal, via the second connection.

3. The mobile communication system according to claim 1, wherein
the first control signal includes assignment information indicating a radio resource to be assigned to the radio communication apparatus from among the D2D radio resources.

4. The mobile communication system according to claim 1, wherein
the radio communication apparatus transmits a second control signal to the network apparatus via the first connection,
in response to receiving the second control signal, the network apparatus transmits the first control signal including the assignment information, to the radio communication apparatus, and
the second control signal includes a D2D scheduling request for requesting assignment of a radio resource for the D2D communication, or a D2D buffer status report indicating an amount of user data waiting to be transmitted in the D2D communication.

5. The mobile commmication system according to claim 1, wherein
in a case in which the mobile communication system is an FDD communication system, the uplink radio resources are an uplink frequency band assigned to the mobile communication system.

6. The mobile communication system according to claim 1, wherein
the network apparatus changes an amount of the D2D radio resources in the uplink radio resources based on at least one of a load status of the cellular communication network and the number of radio communication apparatuses performing the D2D communication.

7. The mobile communication system according to claim 1, wherein
the cellular communication network includes a radio access network and a core network,
the radio access network includes a base station,
the core network includes a serving gateway, and
the controller establishes a logical communication path for forwarding the user data, between the radio communication apparatus and the serving gateway, or between the radio communication apparatus and the base station.

8. The mobile communication system according to claim 1, wherein
before starting the D2D data relay, the controller transmits notification information about availability/unavailability of the D2D data relay, to the network apparatus, based on at least one of apparatus information associated with the radio communication apparatus, and user information associated with a user of the radio communication apparatus.

9. The mobile communication system according to claim 8, wherein
the apparatus information is at least one of a connection status relating to the second connection, a connection status of the radio communication apparatus with respect to a power source, a battery remaining amount of the radio communication apparatus, and a moving status of the radio communication apparatus.

10. The mobile communication system according to claim 8, wherein
the user information is at least one of information about agreement to the D2D data relay, and a status of ON/OFF of the D2D data relay that is set by a manual operation.

11. The mobile communication system according to claim 8, wherein
the network apparatus that has received the notification information determines, based on the notification information, whether to switch a data path of the neighboring radio terminal from a first data path passing through the cellular communication network, to a second data path passing through the radio communication apparatus.

12. The mobile communication system according to claim 11, wherein
the network apparatus that has determined to switch the data path transmits setting information for starting discovery processing for the D2D communication, to at least either one of the radio communication apparatus and the neighboring radio terminal.

13. The mobile communication system according to claim 1, wherein
the controller transmits a discovery signal in discovery processing for the D2D communication, and
the discovery signal includes information indicating that the D2D data relay is available.

14. A radio communication apparatus in a mobile communication system supporting D2D communication being direct terminal-to-terminal communication, the radio communication apparatus receiving a first control signal via first connection with a cellular communication network, and performing the D2D communication with a neighboring radio terminal based on the first control signal, the radio communication apparatus comprising:
a network interface configured to receive downlink user data addressed to the neighboring radio terminal, via second connection different from the first connection; and
a controller configured to perform D2D data relay of transmitting the downlink user data to the neighboring radio terminal through the D2D communication, wherein
D2D radio resources assignable to the D2D communication are part of uplink radio resources assigned to the mobile communication system, and
a proportion of the D2D radio resources to the uplink radio resources is changed.

15. A network apparatus provided in a cellular communication network in a mobile communication system supporting D2D communication being direct terminal-to-terminal communication, the network apparatus comprising:
a controller configured to assign a radio resource for the D2D communication to a radio communication apparatus configured to receive a first control signal via first connection with the cellular communication network, and to perform the D2D communication with a neighboring radio terminal based on the first control signal, wherein
the D2D communication is used for performing D2D data relay of transmitting downlink user data received by the radio communication apparatus via second connection different from the first connection, from the radio communication apparatus to the neighboring radio terminal,
D2D radio resources assignable to the D2D communication are part of uplink radio resources assigned to the mobile communication system, and
the controller changes a proportion of the D2D radio resources to the uplink radio resources.

16. A mobile communication system supporting D2D communication being direct terminal-to-terminal communication, the mobile communication system comprising:
a mobile radio terminal configured to receive a first control signal from a base station, and to perform the D2D communication with a neighboring radio terminal based on the first control signal, wherein
the radio terminal includes:
a network interface configured to receive downlink user data addressed to the neighboring radio terminal, via connection at an end that is different from connection with the base station that has been used in receiving the first control signal; and
a controller configured to perform D2D data relay of transmitting the downlink user data to the neighboring radio terminal through the D2D communication.

17. The mobile communication system according to claim 16, wherein
the connection at the end is connection between the radio terminal and an apparatus directly connected to the radio terminal.

18. The mobile communication system according to claim 17, wherein
the network interface can change the directly-connected apparatus.

19. The mobile communication system according to claim 16, wherein
the connection at the end is radio connection.

20. The mobile communication system according to claim 16, wherein
the connection at the end is connection with a base station different from the base station.

21. The mobile communication system according to claim 16, wherein
in a case in which the connection at the end has been established by the network interface, the radio terminal transmits notification information indicating that the D2D data relay is available.

22. A mobile radio terminal for receiving a first control signal from a base station, and performing D2D communication being direct terminal-to-terminal communication, with a neighboring radio terminal based on the first control signal, the radio terminal comprising:
a network interface configured to receive downlink user data addressed to the neighboring radio terminal, via connection at an end that is different from connection with the base station that has been used in receiving the first control signal; and
a controller configured to perform D2D data relay of transmitting the downlink user data to the neighboring radio terminal through the D2D communication.
